# FASCICULE DE BREVET EUROPEEN

(11) **EP 2 115 363 B1**
(45) Date de publication et mention de la délivrance du brevet: **20.04.2016**
(21) Numéro de dépôt: 08761945.8
(22) Date de dépôt: 16.01.2008
(51) Int. Cl.: F24D 3/14

(54) **STRUCTURE PORTANTE POUR LE CLOISONNEMENT ET/OU CONTRE-CLOISONNEMENT AVEC CHAUFFAGE ET/OU REFROIDISSEMENT INTEGRE.**
TRÄGERSTRUKTUR ZUR PARTITIONIERUNG UND/ODER INNEREN PARTITIONIERUNG MIT INTEGRIERTER HEIZUNG UND/ODER KÜHLUNG
CARRIER STRUCTURE FOR PARTITIONING AND/OR INNER PARTITIONING WITH INTEGRATED HEATING AND/OR COOLING

(30) Priorité: 17.01.2007 FR 0752724
(43) Date de publication de la demande: 11.11.2009
(73) Titulaire: Fischer, Thomas, 67000 Strasbourg (FR)
(72) Inventeur: FISCHER, Thomas, F-67000 Strasbourg (FR)
(74) Mandataire: Rhein, Alain
(86) Numéro de dépôt international: PCT/FR2008/050075
(87) Numéro de publication internationale: WO 2008/107594

(56) Documents cités:
- EP-A- 0 022 646
- EP-A1- 1 457 614

## Description

L'invention concerne une structure portante pour le cloisonnement et/ou le contre-cloisonnement à chauffage et/ou refroidissement intégré.

L'invention concerne encore un procédé de cloisonnement et/ou contre-cloisonnement mettant en oeuvre une telle structure.

La présente invention trouvera son application dans le domaine des matériaux pour la construction. Elle a trait, tout particulièrement, à une nouvelle structure de cloisonnement et/ou contre-cloisonnement. L'invention concerne, en même temps, le domaine des systèmes de chauffage pour locaux clos.

A ce propos, l'on connaît, à l'heure actuelle, différents systèmes de chauffage appliqués à un local clos. Quelle que soit la source d'énergie, à l'intérieur de ce local sont répartis des moyens d'échange de chaleur. En particulier, il est connu d'installer dans une construction des radiateurs ou autres panneaux chauffants, voire des dispositifs dits ventilo-convecteurs, de tels dispositifs assurant un transfert d'énergie d'une source froide ou chaude à un local que ce soit par effet rayonnant, par convection naturelle ou par convection forcée. Il est encore connu des systèmes de planchers chauffants et/ou refroidissants qui consistent à intégrer à une dalle un moyen de chauffage ou de refroidissement sous forme d'un réseau de tuyaux traversé par un fluide caloporteur ou de nappes de résistances chauffantes. A ce propos, de telles nappes de résistances chauffantes sont encore susceptibles d'être intégrées sous toiture ou sous plafond. En réalité, si de telles nappes de résistances chauffantes peuvent être intégrées dans toutes les parties d'une construction, leur mise en oeuvre est réservée à des intervenants spécialisés et, de toute manière, la source d'énergie ne peut être qu'électrique.

Finalement, lorsque la source d'énergie résulte d'un fluide caloporteur, le chauffage ou le refroidissement s'effectue, comme précédemment évoqué, soit au travers de panneaux ou autres appareillages fixés au mur ou rapportés au sol, soit au travers d'une dalle conçue expressément dans ce but. D'ailleurs, il est quasi impossible d'équiper une construction existante, notamment dans le cadre d'une rénovation, d'une dalle chauffante à circulation de fluide, de sorte que la rénovation d'un système de chauffage et/ou de refroidissement dans une construction ne peut se faire que par la mise en place ou le remplacement de ces panneaux échangeurs de chaleur nommés radiateurs, ventilo-convecteurs, panneaux rayonnants, etc...

Evidemment, le raccordement de ces panneaux à une source de chaleur unique pose le problème de l'intégration à un local du réseau de canalisations nécessaire à cet effet. Si, différentes solutions existent, à l'heure actuelle pour rendre invisible ce réseau de canalisations dans le neuf, dans la rénovation il est souvent apparent, ou nécessite, comme dans le document EP 0 022 646, d'être monté en applique puis recouvert par un panneautage superficiel qui consomme de l'espace et est peu esthétique. Les réalisations antérieures concernent en général des dispositifs chauffants, mais aucune n'est conçue comme un matériau de construction directement utilisable par les corps de métier.

Pour autant, on a pu constater que dans le cadre de l'amélioration donc de rénovation d'un bâtiment, il est usuel de revoir la subdivision de l'espace et, surtout, d'améliorer son degré d'isolation au travers d'un parement du côté intérieur des murs extérieurs. Ce parement s'effectue au travers de panneaux de doublure sous forme de plaques de plâtre combinée à une épaisseur d'un matériau isolant de type polystyrène ou polyuréthane voire de laine de verre ou laine de roche.

Il est également courant de doubler ces murs extérieurs au moyen d'une structure à laquelle on fait usuellement appel pour le cloisonnement d'une construction. Cette structure est composée de profilés métalliques comportant, essentiellement, des montants dont les extrémités supérieure et inférieure sont fixées dans des rails rapportés au sol et au plafond de la construction. Ainsi sur cette structure que ce soit d'un côté dans le cas de panneaux de doublure ou de part et d'autre lorsqu'il s'agit de cloisons, peuvent être rapportées des plaques de parement souvent sous forme de plaques de plâtre ou d'un matériau composite quelconque.

La structure elle-même présente une certaine épaisseur autorisant la mise en place d'un matériau isolant, qu'il s'agisse d'un isolant phonique ou thermique. En outre, de manière régulière, les montants sont perforés d'ouvertures pour le passage de gaines électriques voire d'autres conduites.

De telles structures ont largement fait leurs preuves et sont considérées comme des matériaux répondant parfaitement à des contraintes de longévité, d'isolation et de tenue mécanique.

C'est dans le cadre d'une première démarche inventive qu'il a été imaginé d'intégrer dans une telle structure un réseau d'éléments de chauffage et/ou de refroidissement pour l'installation d'un chauffage et/ou refroidissement dans un local, système avec une efficacité supérieure aux panneaux de type radiateurs ou autres connus. En effet, si de tels radiateurs sont nécessairement de dimension réduite et sont davantage adaptés à des sources de chaleur à température élevée, l'intégration de systèmes de chauffage dans des cloisons ou contre-cloisons permet de définir des panneaux rayonnants de très grande surface améliorant l'échange de chaleur pour une meilleure répartition dans une pièce, ceci partant d'une source de chaleur dite basse température. En conséquence, une telle solution s'avère particulièrement adaptée aux sources de chaleur à énergie renouvelable du type géothermie, solaire, etc...

Ainsi, l'invention concerne plus particulièrement une structure portante pour le cloisonnement et/ou le contre-cloisonnement à chauffage et/ou refroidissement intégré selon la revendication 1.

L'invention concerne encore un procédé de cloisonnement et/ou contre-cloisonnement mettant en oeuvre une telle structure.

Les avantages découlant de la présente invention consistent en ce qu'une structure dont on vient assurer le montage pour réaliser un cloisonnement ou un contre-cloisonnement peut recevoir dans cette même opération de montage des éléments de chauffage et/ou de refroidissement ceci de manière à définir finalement de grands panneaux rayonnants garants d'une parfaite homogénéité de température dans un local sans pour autant constituer des éléments encombrants dans ce local comme le sont les panneaux rayonnants usuellement connus tels que les radiateurs, ventilo-convecteurs et autres.

D'autres buts et avantages de la présente invention apparaîtront au cours de la description qui va suivre se rapportant à des exemples de réalisation donnés à titre indicatif et non limitatif.

La compréhension de cette description sera facilitée en se référant aux dessins joints dans lesquels :
- la figure 1 est une représentation schématisée, en perspective, d'une cloison réalisée à partir d'une structure conforme à l'invention ;
- la figure 2 est une vue similaire à la figure 1 illustrant la conception d'une contre-cloison au moyen d'une telle structure ;
- la figure 3 est une vue de détail représentant, de manière schématisée, la fixation d'une goulotte sur un montant ;
- la figure 4 est une vue en section d'une goulotte ;
- la figure 5 représente, de manière schématisée et en perspective, l'implantation d'un élément chauffant et/ou refroidissant dans une goulotte, exactement à une extrémité de cette dernière ;
- la figure 6 est une vue schématisée et en perspective d'un module de capot de protection d'extrémité ;
- la figure 7 est une représentation schématisée de la fixation d'un tel module de capot sur un montant ;
- la figure 8 représente, de manière schématisée et en perspective, l'implantation d'un élément chauffant et/ou refroidissant dans une goulotte;
- la figure 9 représente, de manière schématisée et en perspective, un élément d'un module de capot de protection d'extrémité;
- la figure 10 représente, de manière schématisée et en perspective, un autre élément d'un module de capot de protection d'extrémité, dans la variante de la figure 9.

Dans la description qui va suivre on se réfère aux figures des dessins ci-jointes.

La présente invention concerne le domaine des structures pour cloisons ou contre-cloisonnement.

Tout particulièrement, l'invention concerne une telle structure 1 avec chauffage et/ou refroidissement intégré.

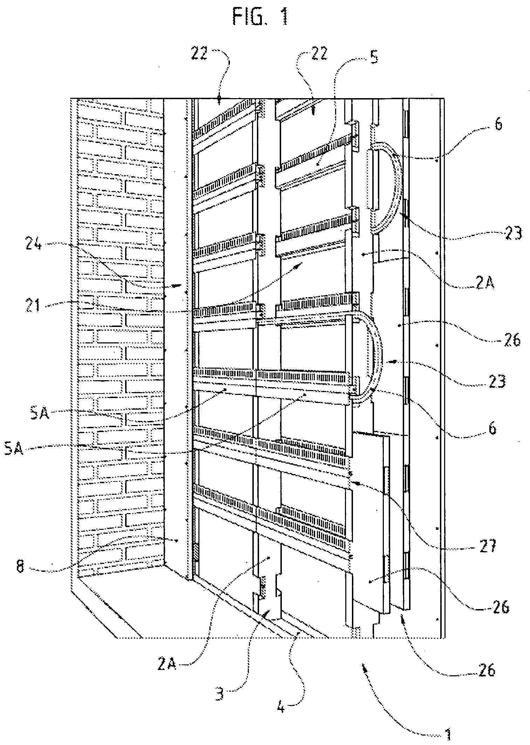

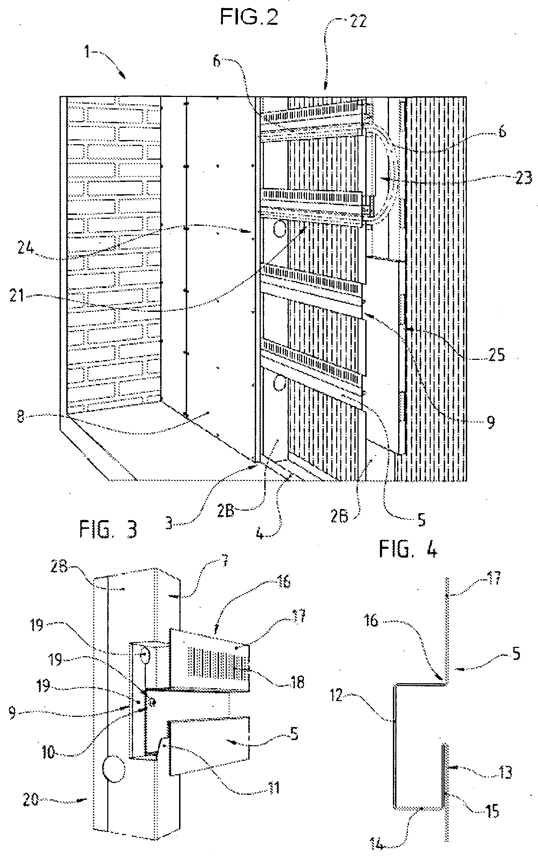

Ainsi, selon l'invention, cette structure est définie par des montants 2 qui, comme l'illustrent les figures 1 et 2, sont conçues aptes à être solidarisées à la structure d'un bâtiment.

Ainsi, dans le cadre d'un cloisonnement mais aussi pourquoi pas d'un contre-cloisonnement comme cela apparaît dans la figure 2, les extrémités supérieure et inférieure 3 de ces montants 2 peuvent être maintenues par rapport à la structure existante d'un bâtiment à l'aide d'un rail de fixation 4. Ainsi, celui-ci peut emprunter une forme simple de U dans lequel va pouvoir venir s'engager, par emboîtement, l'extrémité 3 d'un montant 2 pour être maintenue en position. Cependant, comme cela apparaîtra plus en avant dans la description, dans le cadre d'un contre-cloisonnement, lesdits montants 2B peuvent être conçus de manière apte à être fixés directement sur le bâti existant.

La structure comporte encore des entretoises, conçues sous forme de profilés, appelées ici goulottes traversantes 5 définies de manière apte à être fixées sur les montants 2 sachant que de telles goulottes sont conçues pour recevoir un réseau d'éléments chauffants et/ou refroidissants 6. Ces goulottes 5 servent de support et de protection à ces éléments chauffants et/ou refroidissants 6, et présentent l'avantage de la légèreté et de facilité de mise en oeuvre, en comparaison avec l'art antérieur dans le domaine de la rénovation mettant en oeuvre des panneaux de grande surface.

Le fait que les goulottes 5 soient traversantes par rapport aux montants 2 est un gros avantage, à la fois en termes de rigidité et d'encombrement de la structure 1 ainsi constituée. La structure 1 est donc portante ou autoporteuse c'est-à-dire indépendante de la structure parallèle du bâtiment, ce qui évite la création de pont thermique.

Lesdits montants 2 comportent, préférentiellement de manière équidistantes, sur l'un au moins de leurs côtés 7 par ailleurs conçu pour recevoir un parement 8, une ou des découpes d'emboîtement 9 à l'intérieur desquelles lesdites goulottes 5 sont conçues aptes à être fixées par emboîtement. Ce parement 8 est conçu pour jouer le rôle de diffuseur des éléments chauffants et/ou refroidissants 6, dont le réseau est intégré à la structure 1, et non au parement 8 proprement dit.

Ainsi, selon l'invention, ladite découpe 9 est conçue de manière à définir, du côté 7 du montant 2, un rebord d'accrochage 11 sur lequel la goulotte 5 est définie apte à venir s'engager.

A ce propos, cette goulotte 5 emprunte la forme générale d'un U et comporte une paroi arrière 12, une paroi avant 13, toutes deux reliées au travers d'un fond 14.

La paroi avant 13 est repliée sur elle-même de manière à définir une fente d'emboîtement 15 au travers de laquelle cette goulotte 5 va pouvoir s'engager sur le rebord d'accrochage 11.

En outre, cette double épaisseur que définit, ainsi, cette paroi avant 13, vient à protéger, contre le percement, l'élément chauffant et/ou refroidissant 6 que l'on vient déposer dans la goulotte 5.

Dans la mesure où le chauffage et/ou refroidissement intervient, essentiellement, par rayonnement, il est important qu'il soit assuré une parfaite conduction entre ledit élément chauffant et/ou refroidissant 6 et le panneau de parement 8 que reçoit la structure 1.

Aussi, la goulotte 5 comporte encore un élément radiateur 16. Celui-ci consiste en un prolongement de la paroi arrière 12 de cette goulotte, cette paroi arrière comportant un premier pli en direction de la paroi avant 13 puis un second pli de manière à définir une aile 17 s'étendant parallèlement à ladite paroi avant 13 et en direction opposée. Cette aile 17 tout comme la paroi avant 13 vient, ainsi, se plaquer à l'arrière du parement 8 que reçoit la structure 1. A noter, encore, que cette aile 17 peut être découpée de manière à définir une succession d'ailettes 18 favorisant l'échange. Ces découpes permettent également de parfaire la liaison goulotte / plaque de parement par collage.

Comme cela a été suggéré plus haut, dans le cas de la conception de cloisons, un montant 2 peut être conçu symétrique par rapport à un plan médian vertical de manière apte à recevoir de part et d'autre de la structure 1 un parement 8 tout comme au travers de cette symétrie, recevoir, de part et d'autre, des goulottes 5 pour l'intégration d'éléments chauffants et/ou refroidissants 6.

De manière préférentielle, les montants 2 tout comme les goulottes 5 sont conçus par profilage d'une tôle comportant des prédécoupes adéquates pour la définition des découpes 9 voire des ailettes 18.

On note d'ailleurs que dans ces montants 2 ou goulottes 5 peuvent encore être prévues des ouvertures 19 pour le passage de moyens de fixation 10 ou le passage d'outils pour accéder à de tels moyens de fixation. Les découpes 9 pratiquées dans les montants 2 permettent avantageusement l'accès à ces ouvertures 19 et à ces moyens de fixation 10.

Ces prédécoupes ont été représentées plus particulièrement dans la figure 3 illustrant le montage d'une goulotte sur un montant 2B conçu pour la conception d'un contre-cloisonnement. En particulier, et comme cela a été représenté dans la figure 2, ce montant, au lieu d'être symétrique, peut ne comporter que sur un seul de ses côtés 7 des découpes d'emboîtement 9 tandis qu'au travers de son côté opposé 20 il peut être défini de manière apte à être rapporté en applique voire fixé sur une cloison existante.

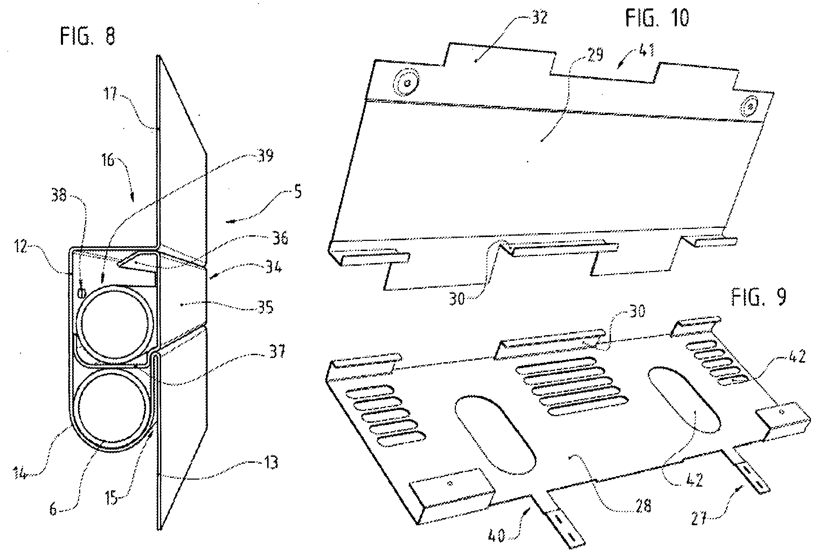

Tel que visible sur la figure 8, les goulottes 5 sont encore conçues de façon à recevoir un obturateur de goulotte 34, avec un profil sensiblement en U, conçu apte à prolonger, par l'une de ses faces 35, formant le fond du U et encadrée par une première 36 et une deuxième aile 37, la paroi avant 13 et l'aile 17 de la goulotte 5. Avantageusement, un tel obturateur de goulotte 34 est inséré dans cette dernière 5 par un mouvement de rotation, tel qu'une charnière, puis par un clipage grâce à l'élasticité de la première aile 36, du côté de l'aile 17 de la goulotte 5. La deuxième aile 37 est plus particulièrement conçue pour refermer la zone inférieure de la goulotte 5 qui contient un élément chauffant et/ou refroidissant 6. De façon préférée, la forme de cette zone inférieure de la goulotte est complémentaire à celle de cet élément chauffant et/ou refroidissant 6, et notamment en gouttière semi-cylindrique. Avantageusement, la deuxième aile 37 vient en contact avec l'élément chauffant et/ou refroidissant 6, voire même présente elle aussi une forme complémentaire à celle de ce dernier. Ces dispositions permettent d'augmenter la surface d'échange des éléments chauffants et/ou refroidissants 6 avec la structure 1, et de limiter les risques de condensation à l'intérieur de la goulotte 5.

La goulotte 5 peut, encore, être munie sur sa paroi arrière 12, de découpes 38 conçues pour favoriser le montage et permettre l'aération de la goulotte 5.

L'obturateur de goulotte 34 permet, encore, de délimiter dans cette dernière 5 un compartiment supérieur 39, qui peut avantageusement contenir d'autres éléments chauffants et/ou refroidissants 6, voire des gaines électriques, ou d'autres conduites de tout type.

Selon l'invention, les éléments chauffants et/ou refroidissants 6 définissent un réseau 21 s'étendant en tout ou partie dans les goulottes 5.

A ce propos, il nous faut préciser qu'une structure composée de deux montants au moins 2A ou 2B, entretoisés par des goulottes 5 vient définir un panneau 22 comme cela est visible dans les figures 1 et 2, sachant que de part et d'autre d'un tel panneau 22 vu dans le sens des goulottes traversantes 5, sont préservées au niveau de la structure 1 des zones de retournement 23, 24, zones ainsi définies car autorisant aux éléments chauffants et/ou refroidissants 6 de passer d'une goulotte 5 à une suivante placée au-dessus ou en-dessous et concevoir le réseau 21.

De manière avantageuse, à hauteur de ces zones de retournement 23, 24, ladite structure comporte des capots de protection d'extrémité 25 remplissant la double fonction de protéger les portions d'éléments chauffants et/ou refroidissants 6 sur leur longueur s'étendant entre deux goulottes 5 mais aussi d'assurer le transfert d'énergie thermique par rayonnement. Les éléments 6 sont ainsi protégés, sur toute leur longueur, soit par les capots 25, soit par les goulottes 5.

De manière préférentielle, ces capots de protection 25 sont composés de modules élémentaires 26 conçus aptes à s'étendre parallèlement à un montant 2 au moins entre deux goulottes successives 5. Ainsi, un tel module de capot de protection élémentaire 26 comporte des moyens de fixation 27 conçus aptes à coopérer avec au moins deux découpes d'emboîtement 9.

Un tel module de capot de protection 26 peut se présenter sous forme d'un profil en U ouvert latéralement et comporte une paroi arrière 28, une paroi avant 29 toutes deux reliées par l'un de leurs bords latéraux au moyen d'un fond 30. Sur leur bord opposé à ce fond 30, la paroi arrière 28 comporte, en tant que moyen de fixation 27, au moins deux languettes 31 conçues aptes à venir en applique en fond de découpe d'emboîtement 9 pour y être fixées grâce à des moyens de fixation adaptés tels que vis, rivets ou similaires sachant qu'au niveau de la paroi avant 29 et sur ce même bord opposé au fond 30, le module de capot élémentaire 26 comporte des languettes d'écartement 32 qui, en venant en applique sur le côté 7 d'un montant 2 permettent de préserver entre ladite paroi arrière 28 et la paroi avant de ce module de capot de protection 26, un écartement sensiblement constant, sans pincement sur les éléments chauffants et/ou refroidissants 6. Selon un exemple, le module de capot de protection 26 est réalisé en plusieurs parties, notamment en deux parties, une première partie dite châssis 40 constituant la paroi arrière 28 munie des moyens de fixation 27, la deuxième partie dite capot 41 constituant la paroi avant 29 conçue apte à être posée sur la première partie après la pose des éléments chauffants et/ou refroidissants 6 et comportant les languettes d'écartement 32. Le fond 30, quant à lui, peut être constitué par une succession de rebords pliés appartenant alternativement à la première et à la deuxième partie du module de capot de protection 26.

Dans l'un ou l'autre exemple, la paroi arrière 28 est avantageusement pourvue d'un ensemble de découpes 42 conçues pour permettre un accès par l'arrière aux éléments chauffants et/ou refroidissants 6 ou à une gaine ou conduite logée dans la goulotte 5, ou encore pour fixer ces derniers au module de capot de protection 26.

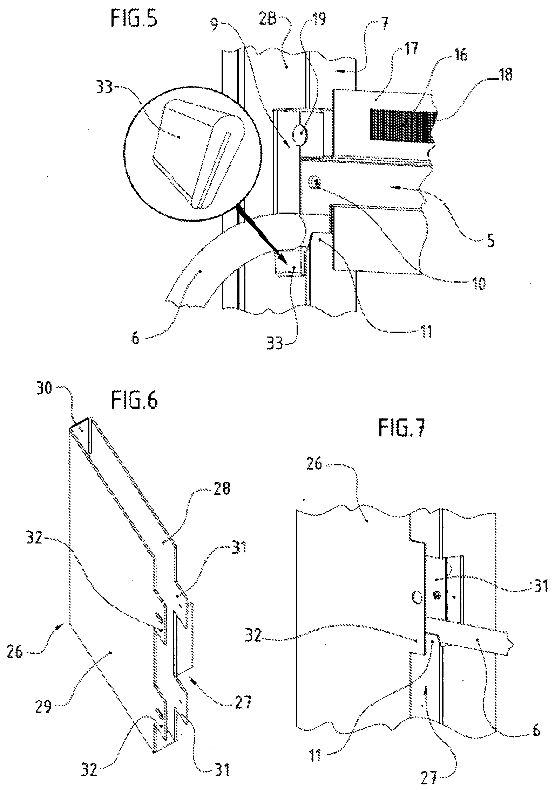

Sur la figure 5, il est plus particulièrement visible un embout de protection 33 conçu apte à être emboîté sur le champ saillant que peut définir la tôle concevant un montant 2A, 2B au droit d'une découpe d'emboîtement 9.

Si les goulottes traversantes 5 protègent tout du long des éléments chauffants et/ou refroidissants 6, à hauteur des zones de retournement 23 ou 24 et en l'absence de telles goulottes, ceci n'est pas le cas et de tels embouts de protection 33 peuvent efficacement protéger les éléments chauffants et/ou refroidissants 6.

D'ailleurs, à ce propos, ceux-ci peuvent être définis par des tubes flexibles en matière synthétique susceptibles d'être traversés par un fluide caloporteur.

Au travers de ce qui précède, on constatera, d'ailleurs, qu'un opérateur spécialisé dans le montage de cloisons ou contre-cloisons est tout à fait en mesure de mettre en place de tels éléments chauffants sans nécessiter de compétence particulière dans le domaine des installations sanitaires de chauffage ou d'utilisation.

L'invention présente l'avantage de permettre la réalisation simultanée des opérations de montage du cloisonnement et du circuit de chauffage/refroidissement.

Bien sûr, au niveau d'une telle structure 1 conforme à l'invention et en particulier entre deux montants successifs 2A ; 2B, définissant un panneau 22 peut être intégré un matériau isolant. Tout particulièrement, celui-ci peut définir un panneau réflecteur à l'arrière des goulottes 5 de manière à réfléchir l'énergie thermique dispensée par les éléments chauffants et/ou refroidissants 6 en direction de l'intérieur de la pièce.

Bien évidemment, qu'il s'agisse des montants, des goulottes, ou des modules élémentaires de capot de protection 26, ils sont recoupables en longueur. Toutefois, de manière avantageuse, une goulotte 5 est constituée d'une succession de tronçons de goulotte 5A de longueur standard correspondant à l'écartement usuel à respecter entre deux montants 2A ; 2B successifs. Ainsi, deux tronçons de goulottes 5A, sont conçus aptes à venir abouter l'un avec l'autre, sensiblement à hauteur du plan médian transversal d'un montant 2A ; 2B.

Dans un exemple préféré, tel que visible sur les figures, les goulottes 5 sont montées perpendiculairement aux montants 2.

Pour en revenir au parement 8 que peut recevoir une telle structure 1 conforme à l'invention, celui-ci peut être constitué de manière classique par des plaques de plâtre que l'on vient visser grâce à des vis auto-perçantes sur lesdits montants 2A, 2B. L'utilisateur peut choisir l'espacement ou/et le pas des montants 2, en fonction de la topologie des lieux, ainsi que des dimensions des accessoires dont il dispose, notamment des parements 8, ce qui permet le cas échéant d'en éviter des découpes, et ainsi de procurer un gain de temps de montage appréciable. La structure 1 selon l'invention permet de disposer d'espaces libres entre les montants 2, ainsi qu'entre les goulottes 5, ce qui autorise des zones de percement et d'encastrement.

Comme cela a déjà été précisé plus haut, le risque de percement d'un élément chauffant et refroidissant 6 au moyen d'une telle vis, pendant la phase d'assemblage, ou par d'autres types d'agressions, ultérieurement, est évité au travers de la conception particulière des goulottes 5 et des modules élémentaires du capot de protection 26.

Les éléments chauffants et/ou refroidissants 6 selon l'invention peuvent aussi bien être des éléments à fluide caloporteur, que, dans le cas d'éléments chauffants uniquement, des éléments électriques.

Avantageusement, on peut conserver, au sein de la cloison ou contre-cloison, un vide d'air, qui constitue alors un canal de circulation d'air pour la convection naturelle ou forcée. La structure 1 comporte, notamment au niveau des parements 18, des ouvertures d'entrée et de sortie de cet air, préférentiellement en bas et en haut de cloisons et protégées par des déflecteurs. De tels moyens de convection créent une convection naturelle dans le vide de cloison éventuel. Ils peuvent notamment comporter des moyens de convection forcée, par exemple sous forme d'un ventilateur, notamment radial. Un tel équipement permet alors le contrôle de la direction du flux, en autorisant, en période de chauffe, le rabattement de l'air chaud situé en haut du local vers le sol, et, à l'inverse en période de rafraîchissement la remontée de l'air froid concentré au sol vers le plafond. L'homogénéisation de la température ambiante ainsi obtenue augmente le confort et réduit la dépense énergétique.

La structure 1 peut encore recevoir des moyens de diffusion de produits de traitement, gazeux ou aérosols, tels que bactéricides, acaricides, insecticides, fongicides, ou analogues. Ces moyens de diffusion peuvent avantageusement se présenter sous la forme de traversées de cloison, fixées sur un des éléments creux de la structure, tel que montant 2 ou rail 4, alors utilisées comme diffuseurs. Ces traversées de cloisons, installées à demeure dans la structure, sont pourvues de moyens de raccordement à une source de produits de traitement, tels qu'un embout muni d'une valve par exemple.

La structure 1 peut encore recevoir des moyens d'accumulation de chaleur / froid. Ces moyens peuvent avantageusement se présenter sous la forme de panneaux capables de stocker et restituer progressivement de l'énergie.

Fixés sur les éléments de la structure et en particulier à l'arrière du réseau de goulottes, ces panneaux peuvent être constitués, de manière préférentielle, d'un matériau composite à forte capacité de chaleur latente pouvant contenir des produits à changement de phase.

La structure 1 peut également recevoir des moyens d'échange de chaleur. Ces derniers peuvent être constitués d'éléments radiateurs fixés à l'arrière des goulottes favorisant alors les échanges thermiques dans le cas, par exemple, d'un canal de circulation d'air pour la convection naturelle ou forcée. Ils peuvent également se présenter sous la forme d'un échangeur, notamment à plaques, disposé directement au contact du réseau de goulottes ou indirectement par l'intermédiaire d'éléments radiateurs tels que précités, permettant, par exemple, de réchauffer ou refroidir l'air nécessaire à la ventilation naturelle ou motorisée contrôlée d'un local.

La structure 1 peut aussi intégrer des moyens de régulation de la température ou/et, dans une exécution réservée au cas des éléments chauffants et/ou refroidissants 6 à fluide caloporteur, de prévention de la condensation.

Afin d'éviter la condensation à l'intérieur de la cloison comme sur les surfaces externes, et ceci particulièrement lors de la phase de mise en température, il convient de limiter la différence de température entre les éléments chauffants et/ou refroidissants 6 et leurs goulottes 5 de support d'une part, et d'autre part les éléments qui sont à la température du local : air de la pièce, plaques de parement 18, air du vide de la cloison, et les éléments.

Cette limitation d'écart de température permet, encore, de limiter les phénomènes de dilatation/contraction. Les moyens de régulation de la température ou/et de prévention de la condensation comportent des moyens d'analyse de données physiques, notamment des capteurs de température de l'air ambiant, des plaques de parement 18, de l'air du vide de cloison, de la première goulotte 5 en entrée de circuit qui représente le point le plus froid de la cloison lors d'une phase de mise en température, voire un détecteur de condensation sur cette même goulotte.

Ils comportent des moyens de gestion, tels qu'une centrale de contrôle, commandant des moyens de régulation conçus aptes à réguler le flux calorifique circulant dans les éléments chauffants et/ou refroidissants 6, notamment le débit du fluide caloporteur circulant dans les éléments chauffants et/ou refroidissants 6.

Ces moyens de régulation de débit peuvent prendre la forme d'une électrovanne, ou encore d'un by-pass motorisé notamment disposé dans la cloison, ou encore d'un pilotage à distance de la centrale de chauffage/refroidissement du fluide caloporteur. Un tel by-pass peut, aussi, permettre d'inverser le sens de circulation du fluide pour améliorer l'efficacité du système et le confort: en période de chauffe, l'entrée du fluide par le bas de la cloison crée une dégressivité de la température du bas vers le haut; à l'inverse, en période de rafraîchissement, l'entrée par le haut de la cloison crée une dégressivité de la température du haut vers le bas. Ces mêmes moyens peuvent encore contrôler une ventilation motorisée telle que prévue dans le premier mode de réalisation. En effet, les différents modes de réalisation peuvent naturellement être cumulés entre eux.

Dans le cas d'une cloison utilisant l'énergie électrique, un élément primordial est l'inertie thermique. Il s'agit d'accumuler de la chaleur au meilleur coût pendant les heures creuses pour la restituer durant les heures pleines. Afin d'accroître cette inertie il est possible d'intégrer des éléments accumulateurs de chaleur dans la structure 1, plaqués et fixés à l'arrière des goulottes 5.

Afin d'accroître l'efficacité énergétique d'un bâtiment l'utilisation de la VMC est nécessaire tout comme la récupération de chaleur provenant de sources secondaires. Réchauffer l'air provenant de l'extérieur ou diffuser de la chaleur issue par exemple d'un foyer fermé passe par l'utilisation d'échangeurs de chaleur. De tels échangeurs peuvent être incorporés dans la structure 1 selon l'invention, également plaqués et fixés à l'arrière du réseau de goulottes 5.

Afin de mettre en oeuvre des matériaux isolants, en particulier ceux qui ne sont pas rigides tels que la laine de verre, il est possible de fixer à la structure des supports spécifiquement adaptés.

Des moyens d'accumulation, des moyens d'échange de chaleur et des moyens de fixation peuvent ainsi être intégrés à la structure. Les goulottes 5 sont, alors, avantageusement conçues pour recevoir de tels moyens, et comportent alors des moyens d'appui ou/et de fixation spécifiquement conçus pour des appareillages particuliers, en particulier au niveau des découpes 10 ou/et au niveau des parois arrière 12.

## Revendications

1. Structure portante (1) pour le cloisonnement et/ou le contre-cloisonnement à chauffage et/ou refroidissement intégré, cette structure portante comportant, d'une part, des montants (2) aptes à être fixés à la structure d'un bâtiment et conçus pour recevoir un parement (8), d'autre part, des goulottes traversantes (5) définies de manière apte à être fixées sur lesdits montants (2) et, d'autre part encore, un réseau d'éléments chauffants et/ou refroidissants (6) s'étendant dans tout ou partie desdites goulottes (5), cette structure étant **caractérisée en ce que**:
- les montants (2) comportent, sur l'un au moins de leurs côtés (7) conçu apte à recevoir un parement (8), une ou des découpes d'emboîtement (9) à l'intérieur desquelles lesdites goulottes (5) sont conçues aptes à être fixées par emboîtement, et lesdites découpes (9) sont conçues aptes à définir dudit au moins un côté (7) des rebords d'accrochage (11) pour l'engagement desdites goulottes (5) ;
- ladite goulotte (5) emprunte la forme générale d'un U et comporte une paroi arrière (12), une paroi avant (13), toutes deux reliées au travers d'un fond (14), ladite paroi avant (13) étant repliée sur elle-même de manière à définir une fente d'emboîtement (15).

2. Structure (1) selon la revendication 1, **caractérisée par le fait que** ladite goulotte (5) comporte un élément radiateur (16), notamment sous forme d'un prolongement de ladite paroi arrière (12) de manière à définir une aile (17) s'étendant parallèlement à ladite paroi avant (13) et en direction opposée.

3. Structure (1) selon l'une des revendications 1 ou 2, **caractérisée par le fait qu'**une succession d'au moins deux desdits montants (2A ; 2B) entretoisés par lesdites goulottes (5) définit un panneau (22) de part et d'autre duquel sont préservées des zones de retournement (23, 24), pour le passage desdits éléments chauffants et/ou refroidissants (6) de l'une à l'autre desdites goulottes (5) pour concevoir un réseau (21).

4. Structure (1) selon la revendication 3, **caractérisée par le fait qu'**à hauteur desdites zones de retournement (23, 24), ladite structure (1) comporte des capots de protection d'extrémité (25).

5. Structure (1) selon la revendication 4, **caractérisée par le fait que** lesdits capots de protection (25) sont composés de modules élémentaires (26) conçus aptes à s'étendre parallèlement à un montant (2) au moins entre deux goulottes successives (5).

6. Structure (1) selon l'une des revendications 1 à 5, **caractérisée par le fait que** lesdites montants (2A ; 2B) ou/et lesdites goulottes (5) sont en tôle pliée comportant des ouvertures (19) pour le passage de moyens de fixation (10) ou le passage d'outils pour accéder à de tels moyens de fixation.

7. Structure (1) selon l'une des revendications 1 à 6, **caractérisée par le fait que** le parement (18) comporte des passages d'air pour une circulation naturelle ou forcée dans la cloison ou contre-cloison.

8. Structure (1) selon l'une des revendications 1 à 7, **caractérisée par le fait qu'**elle comporte des moyens de régulation de la température ou/et de prévention de la condensation qui comportent des moyens d'analyse de données physiques, notamment sous forme de capteurs de température ou/et de détecteurs de condensation, ainsi que des moyens de gestion conçus aptes à réguler le flux calorifique circulant dans les éléments chauffants et/ou refroidissants 6, notamment sous la forme d'électrovannes et/ou de by-pass motorisés et/ou de modules de pilotage à distance de la centrale de chauffage/refroidissement du fluide caloporteur.

9. Structure (1) selon l'une des revendications 1 à 8, **caractérisée par le fait qu'**elle comporte des moyens d'accumulation de chaleur / froid se présentant sous la forme de panneaux conçus aptes à stocker et restituer progressivement de l'énergie, fixés sur les éléments de ladite structure (1) et constitués d'un matériau composite à forte capacité de chaleur latente pouvant contenir des produits à changement de phase.

10. Procédé de cloisonnement et/ou contre-cloisonnement avec chauffage et/ou refroidissement intégré, **caractérisé en ce que** :
- on procède au montage d'une structure portante (1) selon l'une des revendications 1 à 9, montage lors duquel
on intègre à ladite structure (1) des éléments chauffants et/ou refroidissants (6);
- on applique sur au moins un des côtés de ladite structure un parement (8).

## Patentansprüche

1. Trägerstruktur (1) zur Partitionierung und/oder inneren Partitionierung mit integrierter Heizung und/oder Kühlung, wobei diese Trägerstruktur einerseits Pfosten (2), die geeignet sind, an die Struktur eines Gebäudes befestigt zu werden, und vorgesehen sind, um eine Verkleidung (8) aufzunehmen, andererseits durchgehende Rinnen (5), die geeignet vorgesehen sind, um an die besagten Pfosten (2) befestigt zu werden, und noch andererseits ein Netzwerk von Heiz- und/oder Kühlelementen (6), die sich im Ganzen oder einem Teil der besagten Rinnen (5) erstrecken, umfasst, wobei diese Struktur **dadurch gekennzeichnet ist, dass**:
- die Pfosten (2) auf mindestens einer ihrer Seiten (7), die geeignet vorgesehen ist, um eine Verkleidung (8) aufzunehmen, einen oder mehreren Einsteckausschnitte (9) umfassen, in denen die Rinnen (5) geeignet vorgesehen sind, durch Einstecken befestigt zu werden, und wobei die besagten Ausschnitte (9) geeignet vorgesehen sind, an der besagten mindestens einen Seite (7) hochstehende Einhakränder (11) für die Einführung der besagten Rinnen (5) zu definieren;
- wobei die besagte Rinne (5) die allgemeine U-förmige Gestalt annimmt und eine Rückwand (12), eine Vorderwand (13), welche beide durch einen Boden (14) miteinander verbunden sind, umfasst, wobei die besagte Vorderwand (13) auf sich selbst gefaltet ist, um einen Einsteckschlitz (15) zu definieren.

2. Struktur (1) nach Anspruch 1, **dadurch gekennzeichnet, dass** die besagte Rinne (5) ein Heizkörperelement (16), nämlich in der Form einer Verlängerung der besagten Rückwand (12), umfasst, um einen Flügel (17) zu definieren, der sich parallel zu der besagten Vorderwand (13) und in entgegengesetzter Richtung erstreckt.

3. Struktur (1) nach einem der Ansprüche 1 oder 2, **dadurch gekennzeichnet, dass** eine Folge von mindestens zwei der besagten, durch die besagten Rinnen (5) beabstandeten Pfosten (2A; 2B) ein Paneel (22) definiert, an dem beidseitig Wendebereiche (23, 24) für den Übergang der besagten Heiz- und/oder Kühlelemente (6) von der einen zu der anderen der besagten Rinnen (5) vorgesehen sind, um ein Netzwerk (21) zu bilden.

4. Struktur (1) nach Anspruch 3, **dadurch gekennzeichnet, dass** die besagte Struktur (1) im Bereich der besagten Wendebereiche (23, 24), Endschutzkappen (25) umfasst.

5. Struktur (1) nach Anspruch 4, **dadurch gekennzeichnet, dass** die besagten Schutzkappen (25) aus elementaren Modulen (26) bestehen, die geeignet vorgesehen sind, sich parallel zu einem Pfosten (2) zumindest zwischen zwei aufeinanderfolgenden Rinnen (5) zu erstrecken.

6. Struktur (1) nach einem der Ansprüche 1 bis 5, **dadurch gekennzeichnet, dass** die besagten Pfosten (2A; 2B) und/oder die besagten Rinnen (5) aus einem gefalteten Blech bestehen, das Öffnungen (19) für den Durchgang von Befestigungsmitteln (10) oder den Durchgang von Werkzeugen, um Zugang zu derartigen Befestigungsmitteln zu haben, umfasst.

7. Struktur (1) nach einem der Ansprüche 1 bis 6, **dadurch gekennzeichnet, dass** die Verkleidung (18) Luftdurchgänge für einen natürlichen oder gezwungenen Umlauf in der Partitionierung oder inneren Partitionierung umfasst.

8. Struktur (1) nach einem der Ansprüche 1 bis 7, **dadurch gekennzeichnet, dass** sie Mittel zur Regelung der Temperatur und/oder zur Verhinderung der Kondensation umfasst, die Mittel zur Analyse von physikalischen Daten, nämlich in der Form von Temperatursensoren und/oder Kondensationsdetektoren, sowie Verwaltungsmittel, die geeignet vorgesehen sind, den in den Heiz- und/oder Kühlelemente 6 fliessenden Wärmestrom zu regulieren, nämlich in der Form von Magnetventilen und/oder motorisierten Bypassen und/oder Modulen zur Fernbedienung der Zentralheizung/-kühlung des Wärmeübertragungsmittels, umfassen.

9. Struktur (1) nach einem der Ansprüche 1 bis 8, **dadurch gekennzeichnet, dass** sie Mittel zur Wärme-/Kältespeicherung umfasst, die als Paneele ausgestaltet sind, die geeignet vorgesehen sind, um allmählich Energie zu speichern und abzugeben, an den Elementen der besagten Struktur (1) befestigt sind und aus einem Verbundwerkstoff mit hoher latenter Wärmekapazität bestehen, der Phasenwechselprodukte enthalten kann.

10. Verfahren zur Partitionierung und/oder inneren Partitionierung mit integrierter Heizung und/oder Kühlung, **dadurch gekennzeichnet, dass**:
- die Montage einer Trägerstruktur (1) nach einem der Ansprüche 1 bis 9 vorgenommen wird, wobei bei der Montage
- in der besagten Struktur (1) Heiz- und/oder Kühlelemente (6) integriert werden;
- auf mindestens eine der Seiten der besagten Struktur (8) eine Verkleidung angebracht wird.

## Claims

1. A carrier structure (1) for the partitioning and/or the inner partitioning with integrated heating and/or cooling, this carrier structure including, on the one hand, posts (2) capable of being fixed to the structure of a building and designed to receive a facing (8), on the other hand, through-ducts (5) defined capable of being fixed to said posts (2) and, yet on the other hand, an array of heating and/or cooling elements (6) extending in all or part of said ducts (5), this structure being **characterized in that**:
- the posts (2) include, on at least one of their sides (7) designed capable of receiving a facing (8), one or several interlocking cutouts (9), inside which said ducts (5) are designed capable of being fixed through interlocking, and said cutouts (9) are designed capable of defining on said at least one side (7) hooking rims (11) for the insertion of said ducts (5);
- said duct (5) adopts the general shape of a U and includes a rear wall (12), a front wall (13), both connected through a bottom (14), said front wall (13) being folded back onto itself such as to define an interlocking slot (15).

2. The structure (1) according to claim 1, wherein said duct (5) includes a radiator element (16), namely in the form of an extension of said rear wall (12), such as to define a wing (17) extending parallel to said front wall (13) and in an opposite direction.

3. The structure (1) according to one of claims 1 or 2, wherein a succession of at least two of said posts (2A; 2B) braced by said ducts (5) defines a panel (22) on both sides of which reversal areas (23, 24) are preserved for the passing of said heating and/or cooling elements (6) from one to another of said ducts (5) for forming an array (21).

4. The structure (1) according to claim 3, wherein at the level of said reversal areas (23, 24) said structure (1) includes protective end caps (25).

5. The structure (1) according to claim 4, wherein said protective caps (25) are comprised of elementary modules (26) designed capable of extending parallel to a post (2) at least between two successive ducts (5).

6. The structure (1) according to one of claims 1 to 5, wherein said posts (2A; 2B) and/or said ducts (5) are made of folded sheet of metal including openings (19) for the passing through of fastening means (10) or the passing through of tools for accessing such fastening means.

7. The structure (1) according to one of claims 1 to 6, wherein the facing (18) includes air passages for a natural or forced circulation in the partition or inner partition.

8. The structure (1) according to one of claims 1 to 7, wherein it includes means for regulating the temperature and/or preventing condensation, which include means for analyzing physical data, namely in the form of temperature sensors and/or condensation detectors, as well as management means designed capable of regulating the heat flow in the heating and/or cooling elements 6, namely in the form of solenoid valves and/or motorized by-passes and/or modules for the remote control of the central heating/cooling of the coolant.

9. The structure (1) according to one of claims 1 to 8, wherein it includes means for storing heat/cold that are in the form of panels designed capable of storing and restituting gradually energy, fixed to the elements of said structure (1) and made of a composite material with high latent-heat capacity, which may contain phase-changing products.

10. A method for the partitioning and/or the inner partitioning with integrated heating and/or cooling, wherein:
- the mounting of a carrier structure (1) according to one of claims 1 to 9 is proceeded to, during which mounting heating and/or cooling elements (6) are integrated into said structure (1);
- a facing (8) is applied onto at least one of the sides of said structure.
